(19) Europäisches Patentamt
European Patent Office
Office européen des brevets

(11) **EP 2 574 598 A1**

(12) **EUROPEAN PATENT APPLICATION**

(43) Date of publication:
**03.04.2013 Bulletin 2013/14**

(51) Int Cl.:
***C01B 11/02*** (2006.01)

(21) Application number: **11183505.4**

(22) Date of filing: **30.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Kemira Oyj**
**00180 Helsinki (FI)**

(72) Inventors:
• **Rahkola, Risto**
  **32730 Sastamala (FI)**
• **Vainio, Pirjo**
  **32700 Huittinen (FI)**

(74) Representative: **Björk, Frida Magdalena**
**Awapatent AB**
**Bellevuevägen 46**
**P.O. Box 5117**
**200 71 Malmö (SE)**

(54) **Production of chlorine dioxide release material**

(57)    The present invention relates to a process for the production of a chlorine dioxide release material comprising the steps of: a) admixing a metal chlorite salt solution or suspension and a dehydrating agent; b) admixing a dry and/or anhydrous acid source capable of donating protons to chlorine dioxide generation reactions, with said metal chlorite salt and dehydrating agent to a mixture; and to a chlorine dioxide release material obtainable by said process. Further a process for the production of chlorine dioxide from chlorine dioxide release material comprising contacting at least one chlorine dioxide release material with a water containing liquid is disclosed.

EP 2 574 598 A1

**Description**

Field of the invention

The present invention relates to a process for the production of chlorine dioxide release materials, a process for the production of chlorine dioxide and a chlorine dioxide release material.

Background of the invention

Chlorine dioxide ($ClO_2$) has many industrial and municipal uses. When it is produced and handled properly, chlorine dioxide is an effective and powerful biocide, disinfectant and oxidizer. Chlorine dioxide is unstable in solution and cannot be stored for any extended length of time. As an alternative metal chlorite salts may be employed, using acidification to generate chlorine dioxide under controlled conditions. Chlorine dioxide may be prepared in a number of ways. Generally metal chlorite (e.g. sodium chlorite), used as a precursor, is combined with concentrated acid or chlorine gas to obtain chlorine dioxide. Such reactor-based technologies have safety problems, since concentrated acids and chlorine gas are employed. If precursor chemicals were to be mixed accidentally at an undesirable time, e.g. in the logistics chain, the situation may become dangerous and lethal accidents may happen. Also, chlorates may be used to produce chlorine dioxide generating materials.

US 7 182 883 discloses a tablet for production of chlorine dioxide when added into liquid water. The tablet is composed of dry sodium chlorite, a dry acid source and a dry source of free halogen.

WO 2005/104703 discloses a mixture for the production of chlorine dioxide in water, which comprises a chlorite salt, a combination of oxidizing chlorine releasing agents and an acid source.

WO2009/091854 discloses a stable chlorine dioxide tablet and a method for preparation of chlorine dioxide. The stable composition comprises a metal chlorite, a metal bromide and a solid acid source.

US 4 104 190 discloses a method of generation chlorine dioxide using alkali or alkali earth metals and a chlorine releasing component, such as sodium dichloroisocyanurate.

US 2010/0209332 discloses a two component system for preparing a chlorine dioxide generation composition.

Impurities are present in dry metal chlorite powders in an amount of up to 20% in commercial powder materials.

Also, a dry metal chlorite powder product is very reactive and presents a safety risk during handling.

In view of the above there is a need for a chlorine dioxide generating system that is suitable for industrial applications, shows good disinfection properties over a long time period and is considered of low risk during handling of chemicals or during failure of equipment.

Summary of the invention

The present invention relates to a process for the production of a chlorine dioxide release material comprising the steps of:

a) admixing a metal chlorite salt solution or suspension and a dehydrating agent;
b) admixing a dry and/or anhydrous acid source capable of donating protons to chlorine dioxide generation reactions, with said metal chlorite salt and dehydrating agent to a mixture.

According to one embodiment of the present invention the metal chlorite salt is selected from the group consisting of alkali metal chlorite salt, alkaline earth metal chlorite salt and a combination thereof. The metal chlorite salt is preferably selected from the group consisting of sodium chlorite, potassium chlorite, calcium chlorite, and magnesium chlorite, or a combination thereof; more preferably the metal chlorite salt is sodium chlorite.

According to one embodiment of the present invention the dry and/or anhydrous acid source is selected from the group consisting of inorganic acid salts, proton ion exchange materials, organic acids, and mineral acids, and combinations thereof.

The dry and/or anhydrous acid source may be selected from inorganic acid salts chosen from the group consisiting of sodium acid salts, potassium acid salts, iron acid salts and aluminium acid salts, and combinations thereof; preferably sodium acid sulfate (sodium bisulfate), potassium acid sulfate, sodium dihydrogen phosphate, potassium dihydrogen phosphate, aluminium sulfate, ferrous sulfate, and ferric chloride, and combinations thereof. The metal chlorite salt may be present in an amount of 0.005-27%, preferably 4-10%, more preferably 5-8% by weight of the chlorine dioxide release material.

The dry and/or anhydrous acid source may comprise or further comprise an acid selected from citric acid, acetic acid, tartaric acid, acetic anhydride, lactic acid, ascorbic acid, glycolic acid, salisylic acid, benzoic acid and sulfamic acid, and combinations thereof.

The dry and/or anhydrous acid source may be selected from the group consisting of sodium acid sulfate, sulfamic acid, aluminium sulfate, ferrous sulfate, and ferric chloride, and combinations thereof.

The dry and/or anhydrous acid source may be present in an amount of 0.01-28%, preferably 10-25%, more preferably 15-20% by weight of the chlorine dioxide release material.

According to another embodiment of the present invention the dehydrating agent is an inorganic material capable of taking up liquid water in a crystal structure. The dehydrating agent may e.g. be chosen from the group consisting of calcium, calcium chloride, calcium hydride, calcium oxide, calcium sulfate, copper sulfate, lithium-aluminum hydride, aluminium oxide, aluminium sulfate, magnesium, magnesium oxide, magnesium perchlorate, magnesium sulfate, molecular sieves (e.g. zeolites, which may be potassium, sodium or calcium aluminosilicate), phosphorous pentoxide, potassium carbonate, potassium hydroxide, silica gel, sodium, sodium hydroxide, sodium sulfate, sulfuric acid, and any combination thereof; preferably calcium chloride, calcium sulfate and magnesium sulfate, and any combination thereof.

The dehydrating agent may be present in an amount of 27-92%, preferably 40-80%, more preferably 50-70% by weight of the chlorine dioxide release material.

According to yet another embodiment of the present invention, step b) is carried out in dry atmosphere.

According to yet another embodiment of the present invention, the in b) obtained mixture is followed by step c) forming said mixture to particles; preferably to particles of a size in the range of 0.001-20 mm, preferably 0.1-15 mm, preferably 0.5-10 mm, preferably 2-10 mm.

According to one embodiment of the present invention, the particles in step c) are chosen from caplets, tablets, pellets, granules, capsules and pills, preferably granules. The particles may be obtained by compacting, compressing, molding or extruding the obtained mixture from step b); and thereafter optionally disintegrating the formed material; optionally followed by sieving the disintegrated material. Granules may be obtained by dry granulation.

The present invention further relates to a process for the production of chlorine dioxide from chlorine dioxide release material comprising contacting at least one chlorine dioxide release material with a water containing liquid.

Also, the present invention relates to a chlorine dioxide release material obtained by or obtainable by the process disclosed herein.

A chlorine dioxide generating composition can for example be in the form of tablets or granules or powder. Tablet and granule form is better than powder because they are not so sensitive to moisture in the air and caking. Granule is the most preferable form because it is simple to make for example by compacting, crushing and sieving. In addition to that, granules have optimal surface area for higher capacity disinfection and conversion of chlorite to chlorine dioxide is better than with powder.

Detailed description of the invention

The present invention relates to production of a chlorine dioxide release agent. The chlorine dioxide release agent is a mixture of a metal chlorite, a dehydrating agent and a dry and/or anhydrous acid source, which agent upon contact with e.g. water releases chlorine dioxide.

The present invention relates to a process for the production of chlorine dioxide release granules. The production process comprises several steps. Firstly, a metal chlorite salt in a liquid is admixed with a dehydrating agent, wherein the dehydrating agent takes up liquid present in the mixture. Thus, any free water of the suspension or solution is captured by the dehydrating agent. Thereafter, the mixture of metal chlorite salt and dehydrating agent is mixed with a dry and/or anhydrous acid source capable of donating protons to chlorine dioxide generation reactions to a (homogenous) mixture. In this mixture the amount of metal chlorite is at most 50 wt%, preferably the amount of metal chlorite is 1-40 wt%, based on the total weight of the mixture, more preferably 2-30 wt%.

The obtained mixture may thereafter be subjected to forming processes to obtain a formed material, e.g. a granule. An example of such a forming process is dry granulation. The forming process may be performed by forming said mixture by compaction, compression, molding or extrusion. The formed materials may then be disintegrated to smaller pieces. The disintegrated material may then be sieved and particles of specific sizes may be obtained. Formed material of a desired size may then be obtained after the forming process using compaction, compression, molding or extrusion; after a following disintegration; and optionally after sieving.

The obtained formed material, e.g. a granule, is preferably hard enough to be handled without excessive dusting or disingerating. The granule may have a particle size of 0.001-20 mm, preferably 0.1-15 mm, preferably 0.5-10 mm, and preferably 2-10 mm.

The metal chlorite salt used in the process according to the present invention is preferably dissolved in a liquid, preferably water. It is beneficial to use an aqueous metal chlorite solution or suspension because it is essentially free of impurities. Further, it is from an environmental and economical point of view more beneficial to use a metal chlorite solution or suspension compared to metal chlorite powder.

A solution of a metal chlorite salt according to the present invention is to be considered a solution regardless of its state of saturation, i.e. the solution may be at, below or above its saturation point. Thus, the solution may be supersaturated or additional amounts of the salt, above the saturation point, can appear as a precipitate. If the metal chlorite is at least partly solid in the liquid, it may be suspended in the liquid.

The metal chlorite salt according to the present invention can be selected from the group consisting of an alkali metal chlorite salt, an alkaline earth metal chlorite salt and a combination thereof. Examples of metal chlorites include, but are not limited to, sodium chlorite, potassium chlorite, calcium chlorite, and magnesium chlorite. Preferably the chlorite is an alkali metal chlorite. Among the alkali metal chlorites, sodium chlorite is the most preferred.

Acid sources useful in the process according to the present invention comprise substantially any dry and/or anhydrous material capable of donating protons to the chlorine dioxide generation reactions. The dry and/or anhydrous acid source do not have any free water around it. If water molecules are present in a dry material they are bound in the form of a complex. Thus, the dry and/or anhydrous acid source may be solid acid producing materials or compounds that create hydrogen protons when added to water. Such dry and/or anhydrous acid sources include, but are not limited to, inorganic acid salts, e.g. sodium acid salts, potassium acid salts, iron acid salts and aluminium acid salts, such as sodium acid sulfate (sodium bisulfate), potassium acid sulfate, sodium dihydrogen phosphate, potassium dihydrogen phosphate; aluminium sulfate, ferrous sulfate, and ferric chloride; proton ion exchange materials such as ion exchange resins and molecular sieves; organic acids, such as citric acid, acetic acid, acetic anhydride, lactic acid, ascorbic acid, glycolic acid, salisylic acid, benzoic acid and tartaric acid; inorganic acids, such as sulfamic acid; and mixtures of acids. Acid sources can be solids, such as sodium hydrogen sulfate and citric acid; liquid acids, such as anhydrous acetic acid.

The dry and/or anhydrous acid source can, preferably, be selected from the group consisting of sodium acid sulfate, sulfamic acid, aluminium sulfate, ferrous sulfate, and ferric chloride.

The dehydrating agents useful according to the present invention comprise materials that are capable of taking up liquid water in a crystal structure. Preferably inorganic materials are used as dehydrating agents.

Some common dehydrating agents are: calcium, calcium chloride, calcium hydride, calcium oxide, calcium sulfate, copper sulfate, lithium-aluminum hydride, aluminium oxide, aluminium sulfate, magnesium, magnesium oxide, magnesium perchlorate, magnesium sulfate, molecular sieves (e.g. zeolites, which may be potassium, sodium or calcium aluminosilicate), phosphorous pentoxide, potassium carbonate, potassium hydroxide, silica gel, sodium, sodium hydroxide, sodium sulfate, sulfuric acid.

Preferred dehydrating agents are calcium chloride, calcium sulfate and magnesium sulfate.

The produced mixture may also contain other components, such as fillers, binders, coloring agents, corrosion inhibitors, surface tension reducers and other biocides. Such components may be added before and/or during and/or after addition of the dehydrating agent and/or acid.

The term "granule" as used herein means a mass of "solid" material, usually compacted, compressed, molded or extruded to various physical shaped, such as blocks, plates, discs, briquettes or units, which thereafter are optionally disintegrated (e.g. crushed) and optionally sieved.

The produced chlorine dioxide release agent may be added to waste waters and industrial process streams where disinfection is desirable. Chlorine dioxide obtained from the agent may be used as bleaching agent and for controlling biofilms in paper industry; disinfectant in waste water treatment (e.g. municipal or industrial waste water treatment); disinfectant in food and beverage industry; for cleaning and disinfecting medical waste; textile bleaching; odor control for the rendering industry; circuit board cleansing in the electronics industry; and uses in the oil and gas industry.

Examples

Example 1

81 g of 12% sodium chlorite solution was mixed with 120 g calcium sulfate hemihydrate. Water of the solution was hydrated as crystal water and this relatively dry material was dried with nitrogen flow for 12 hours until the mass did not change anymore. Adrying step was only done for safety reason since dehydrating process was not optimized. Thereafter, dried mass in an amount of 119 g was mixed with sodium bisulfate in an amount of 8.3 g.

Part of the above chlorine dioxide release agent powder was pressed to a 1 gram tablet with a Perkin Elmer hydraulic press. The tablet pressing time was 5 minutes. The above mentioned method was repeated once. Thus, two powders and two tablets were obtained, which thereafter were tested. The aim was to check the difference with pressed material and powder. About 1 gram tablet or powder was added to 1000 ml distilled water and was mixed with a magnetic stirrer for 1 hour. Calcium sulfate (gypsum) containing material dissolved very slowly, but after one hour the next analysis could be performed.

The $ClO_2$ was analyzed by iodometric titration using the procedure described below.

The total oxidant concentration in each solution containing chlorine dioxide was determined by standard iodometric titration using the following procedure. 100 ml of solution containing chlorine dioxide was placed in 200 ml beaker and 2 grams of potassium iodide was added. After a minute of stirring, 8 ml of 2 N $H_2SO_4$ solution was added and stirred for 3 more minutes. The solution was then titrated with a 0.1 N solution of sodium thiosulfate. The total oxidant concentration was then calculated using the following equation:

$$\text{The total oxidant concentration (mg/liter)} = A \times N \times 134.9$$

where
A = Volume of titrant (ml, thiosulfate)
N = Normality of thiosulfate (0.1 N)

This procedure provides a measure of the total amount of chlorine dioxide oxidant capacity contained in the solution. This includes the sum of the chlorine dioxide present, plus the quantity of chlorine dioxide that would result from the conversion of any chlorite anion in the solution to chlorine dioxide by acid activation.

The concentration of chlorite anion in solution was determined as follows. 100 ml of the solution containing chlorine dioxide was placed in an open glass jar and stripped of its chlorine dioxide by bubbling nitrogen through the solution at a flow rate of about 100 ml/min for about 1 hour until all traces of yellow color were eliminated. The resultant stripped solution was analyzed using the standard iodometric titration procedure as described above. This result is a measure of the equivalent concentration of chlorine dioxide that would be produced by acid activation of the chlorite anion in the solution.

The concentration of free molecular chlorine dioxide in solution was calculated as the difference between the total oxidant concentration and the concentration of chlorite anion as measured in the tests above.

The concentration of free molecular chlorine dioxide = (The total oxidant concentration - The concentration of chlorite anion)/1.676. The results can be seen in Table 1.

Table 1

|  | Obtained amount of $ClO_2$ (mg/l) | Colour |
|---|---|---|
| Powder form | 1.9 - 2.4 | ivory to yellowish |
| Tablet form | 3.0 - 3.8 | strong yellow colour |

It is obvious from Table 1 that the pressed material gave more chlorine dioxide than the powder. Thus, it is clear that powder will disintegrate in the solution and a local acidic environment is not good enough.

Example 2

60 g of 17 wt% sodium chlorite solution was mixed with 120 g calcium sulfate hemihydrate. Water of the solution was hydrated as crystal water and this relatively dry material was dried with nitrogen flow for 12 hours until the mass did not change anymore. A drying step was only done for safety reason since the dehydrating process was not optimized. Thereafter, dried mass in an amount of 135 g was mixed with sodium bisulfate in an amount of 9.4 g.

Part of the above chlorine dioxide release agent powder was pressed to a 1 gram tablets with a Perkin Elmer hydraulic press. The tablet pressing time was 5 minutes. The tablets were crushed to obtain granules. The granules were sieved to three different fractions. 1.1 - 1.4 grams of granules of each fraction were added to 1000 ml distilled water and were mixed with a magnetic stirrer for 7 hour and were kept additional 17 hours in the vessel. Mixing for a short period of time was made before the samples were taken for analysis and the analyses were made as in the example 1. The results were calculated as conversion % from the original chlorite amount in the sample and can be seen in the Table 2.

Table 2

| Sieve fraction | Conversion % (w/w) |
|---|---|
| 1-2 mm | 7 |
| 2-3-36 mm | 17 |
| 3.36-7.1 mm | 28 |

**Claims**

1. A process for the production of a chlorine dioxide release material comprising the steps of:

   a) admixing a metal chlorite salt solution or suspension and a dehydrating agent;
   b) admixing a dry and/or anhydrous acid source capable of donating protons to chlorine dioxide generation reactions, with said metal chlorite salt and dehydrating agent to a mixture.

2. A process according to claim 1, wherein the metal chlorite salt is selected from the group consisting of alkali metal chlorite salt, alkaline earth metal chlorite salt and a combination thereof; preferably the metal chlorite salt is selected from the group consisting of sodium chlorite, potassium chlorite, calcium chlorite, and magnesium chlorite, and any combination thereof; preferably the metal chlorite salt is sodium chlorite.

3. A process according to claim 1or 2, wherein the dry and/or anhydrous acid source is selected from the group consisting of inorganic acid salts, proton ion exchange materials, organic acids, and mineral acids, and any combination thereof.

4. A process according to claim 3, wherein the dry and/or anhydrous acid source is selected from inorganic acid salts chosen from the group consisiting of sodium acid salts, potassium acid salts, iron acid salts and aluminium acid salts; preferably sodium acid sulfate (sodium bisulfate), potassium acid sulfate, sodium dihydrogen phosphate, potassium dihydrogen phosphate, aluminium sulfate, ferrous sulfate, and ferric chloride, and any combination thereof.

5. A process according to claim 3, wherein the dry and/or anhydrous acid source comprises an acid selected from citric acid, acetic acid, tartaric acid, acetic anhydride, lactic acid, ascorbic acid, glycolic acid, salisylic acid, benzoic acid and sulfamic acid, and any combination thereof.

6. A process according to any one of claims 3-5, wherein the dry and/or anhydrous acid source is selected from the group consisting of sodium acid sulfate, sulfamic acid, aluminium sulfate, ferrous sulfate, and ferric chloride, and any combination thereof.

7. A process according to any one of the preceding claims, wherein the dehydrating agent is an inorganic material capable of taking up liquid water in a crystal structure; preferably the dehydrating agent is chosen from the group consisting of calcium, calcium chloride, calcium hydride, calcium oxide, calcium sulfate, copper sulfate, lithium-aluminum hydride, aluminium oxide, aluminium sulfate, magnesium, magnesium oxide, magnesium perchlorate, magnesium sulfate, molecular sieves (e.g. zeolites, which may be potassium, sodium or calcium aluminosilicate), phosphorous pentoxide, potassium carbonate, potassium hydroxide, silica gel, sodium, sodium hydroxide, sodium sulfate, sulfuric acid, and any combination thereof; preferably chosen from calcium chloride, calcium sulfate and/or magnesium sulfate, and any combination thereof.

8. A process according to any one of the preceding claims, wherein step b) is carried out in dry atmosphere.

9. A process according to any one of the preceding claims, wherein the in b) obtained mixture is followed by step c) forming said mixture to particles; preferably to particles having a size in the range of 0.001-20 mm, preferably 0.1-15 mm, preferably 0.5-10 mm, preferably 2-10 mm.

10. A process according to claim 9, wherein said particles in c) are chosen from caplets, tablets, pellets, granules, capsules and pills; preferably granules.

11. A process according to claim 10, wherein the particles are obtained by compacting, compressing, molding or extruding the obtained mixture, thereafter optionally disintegrating the formed material, and optionally followed by sieving the disintegrated material.

12. A process according to claim 11, wherein the particles are granules which are obtained by dry granulation.

13. A process according to any of the preceding claims, wherein the metal chlorite salt is present in an amount of 0.005-27%, preferably 4-10%, more preferably 5-8% by weight of the chlorine dioxide releasing material.

14. A process according to any of the preceding claims, wherein the dry and/or anhydrous acid source is present in an amount of 0.01-28%, preferably 10-25%, more preferably 15-20% by weight of the chlorine dioxide releasing material.

15. A process according to any of the preceding claims, wherein the dehydrating agent is present in an amount of 27-92%, preferably 40-80%, more preferably 50-70% by weight of the chlorine dioxide releasing material.

16. A process for the production of chlorine dioxide from chlorine dioxide release material comprising contacting at least one chlorine dioxide release material according to any one of claims 1-15 with a water containing liquid.

17. A chlorine dioxide release material obtainable by the process accordning to anyone of the claims 1-15.

# EP 2 574 598 A1

Europäisches
Patentamt

European
Patent Office

Office européen
des brevets

## EUROPEAN SEARCH REPORT

**Application Number**

EP 11 18 3505

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/077216 A1 (KLATTE FRED [US]) 24 April 2003 (2003-04-24) * paragraphs [0027], [0037] - [0039], [0052], [0057], [0060], [0083], [0085] * | 1-9, 12-17 | INV. C01B11/02 |
| X | EP 0 933 991 B1 (BERNARD TECHNOLOGIES INC [US]) 30 March 2005 (2005-03-30) * paragraphs [0061], [0071], [0074], [0077], [0091], [0093] * | 1-3, 7-12, 15-17 | |
| X | US 3 591 515 A (LOVELY CLEMENT F) 6 July 1971 (1971-07-06) * column 3, lines 58-67 * * column 4, lines 39-56 * * column 5, lines 7-10,53-65 * | 1-7,10, 11, 13-15,17 | |
| X | WO 2005/104703 A2 (SAFE SOLID SOLUTIONS INC [US]; TARBET BRYON J [US]) 10 November 2005 (2005-11-10) * page 3, lines 5-9; claims 1,2,5,7; examples 1-5 * | 16,17 | TECHNICAL FIELDS SEARCHED (IPC) C01B |

The present search report has been drawn up for all claims

| Place of search | Date of completion of the search | Examiner |
|---|---|---|
| The Hague | 28 February 2012 | Galleiske, Anke |

EPO FORM 1503 03.82 (P04C01)

EP 2 574 598 A1

## ANNEX TO THE EUROPEAN SEARCH REPORT
## ON EUROPEAN PATENT APPLICATION NO.

EP 11 18 3505

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2012

| Patent document cited in search report | | | Publication date | Patent family member(s) | | | Publication date |
|---|---|---|---|---|---|---|---|
| US 2003077216 | A1 | | 24-04-2003 | US | 2003077216 | A1 | 24-04-2003 |
| | | | | US | 2003082087 | A1 | 01-05-2003 |
| EP 0933991 | B1 | | 30-03-2005 | AT | 291841 | T | 15-04-2005 |
| | | | | AU | 718874 | B2 | 20-04-2000 |
| | | | | AU | 4230797 | A | 14-04-1998 |
| | | | | DE | 69732913 | D1 | 04-05-2005 |
| | | | | DE | 69732913 | T2 | 04-05-2006 |
| | | | | EP | 0933991 | A1 | 11-08-1999 |
| | | | | ES | 2252791 | T3 | 16-05-2006 |
| | | | | HK | 1023480 | A1 | 20-01-2006 |
| | | | | JP | 3330957 | B2 | 07-10-2002 |
| | | | | JP | 2001501086 | A | 30-01-2001 |
| | | | | TW | 403629 | B | 01-09-2000 |
| | | | | WO | 9811776 | A1 | 26-03-1998 |
| US 3591515 | A | | 06-07-1971 | DE | 1911995 | A1 | 06-11-1969 |
| | | | | GB | 1261453 | A | 26-01-1972 |
| | | | | GB | 1305040 | A | 31-01-1973 |
| | | | | US | 3591515 | A | 06-07-1971 |
| WO 2005104703 | A2 | | 10-11-2005 | US | 2005249658 | A1 | 10-11-2005 |
| | | | | WO | 2005104703 | A2 | 10-11-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7182883 B
- WO 2005104703 A
- WO 2009091854 A
- US 4104190 A
- US 20100209332 A